# EUROPÄISCHE PATENTANMELDUNG

(11) **EP 1 508 723 A2**
(43) Veröffentlichungstag der Anmeldung: **23.02.2005**
(21) Anmeldenummer: 04018666.0
(22) Anmeldetag: 06.08.2004
(51) Int. Cl.: F16F 9/32

(54) **Schwingungsdämpfer mit einem aussenliegenden Zusatzzylinder**

(30) Priorität: 20.08.2003 DE 10338156
(71) Anmelder: ZF FRIEDRICHSHAFEN AG, 88046 Friedrichshafen (DE)
(72) Erfinder: Trinius, Martin, 53783 Eitorf (DE)

(57) **Zusammenfassung**

Schwingungsdämpfer, umfassend einen mit einem Dämpfmedium gefüllten Zylinder, der eine Strömungsverbindung zu einem externen Zusatzzylinder aufweist, wobei zwischen dem Zylinder und dem Zusatzzylinder ein Träger angeordnet ist, der eine Halteverbindung zwischen dem Zylinder und dem Zusatzzylinder herstellt, wobei der Träger mindestens zwei radial zum Zylinder verlaufende Stege aufweist, die durch mindestens einen Quersteg miteinander verbunden sind.

## Beschreibung

Die Erfindung betrifft einen Schwingungsdämpfer gemäß dem Oberbegriff von Patentanspruch 1.

Aus der DE 43 24 443 A1 ist ein Schwingungsdämpfer bekannt, dessen wesentlicher Erfindungsgedanke besteht darin, dass der Durchlass von einem Distanzteil gebildet wird, das beidseitig konkav abgeformt ist, um eine entsprechende Kontaktfläche zum Mantelrohr und zum rohrförmigen Ventilgehäuse zu schaffen. Zur Orientierung des Ventilgehäuses zum Mantelrohr des Schwingungsdämpfers dient eine Hülse, die endseitig jeweils von einem Absatz im Mantelrohr und im Ventilgehäuse geführt wird. Zur Abdichtung wird eine die Distanzhülse umschließende Ringdichtung verwendet, die axial zwischen dem Ventilgehäuse und dem Mantelrohr und radial von der Hülse und dem Distanzteil vorgespannt wird. Durch diese konzentrische Anordnung der Einzelteile von Hülse, Distanzteil und Ringdichtung zwischen dem Ventilgehäuse und dem Mantelrohr müssen für alle drei Teile bestimmte Fertigungstoleranzen eingehalten werden. Zum einen muss die Hülse axial vorgespannt sein, da ansonsten ein Axialspiel in Verbindung mit einer Geräuschentwicklung auftreten kann. Des weiteren bedarf die Ringdichtung einer besonderen Vorspannung, um ihre Dichtfunktion zu gewährleisten. Zu guter letzt ist eine Toleranz für das Distanzteil einzuhalten, da ansonsten Spalte entstehen, die die Schweiß- öder Lötnaht negativ beeinflussen. Diese drei Toleranzfelder entsprechend genau abzustimmen und vor allem einzuhalten stellt ein erhebliches Fertigungsproblem dar, das es zu lösen gilt.

Eine Alternativlösung wird in der DE 195 27 849 C1 beschrieben. Ein rohrförmiger Übergangskörper verfügt über dem Schwingungsdämpfer und dem Zusatzzylinder zugewandte Flächen, die jeweils mit einer Schweiß-, Löt- oder Klebeverbindung mit dem Schwingungsdämpfer bzw. dem Zusatzzylinder verbunden sind. Auch dieser Übergangskörper ist noch vergleichsweise schwierig in der Herstellung.

Aufgabe der vorliegenden Erfindung ist es, einen Übergangskörper zwischen einem Schwingungsdämpfer und einen Zusatzzylinder zu erreichen, bei dem insbesondere die Herstellung der Kontaktflächen vereinfacht ist.

Erfindungsgemäß wird die Aufgabe dadurch gelöst, dass der Träger mindestens zwei radial zum Zylinder verlaufende Stege aufweist, die durch mindestens einen Quersteg miteinander verbunden sind.

Im Gegensatz zum Stand der Technik ist die Kontaktfläche des Trägers nicht der Kontur des Zylinders und des Zusatzzylinders angepasst, sondern man geht von einer im einfachsten Fall linienförmigen Berührung aus, die durch eine Schweiß-Löt- oder Klebeverbindung ihre vollständige Tragfestigkeit erlangt. Der große Vorteil besteht darin, dass der Träger aus einem ganz einfachen Strangprofil gebildet werden kann.

In der einfachsten Varianten verlaufen die Stege parallel, so dass damit ein H-förmiges Profil des Trägers vorliegt. Man könnte das Profil auch als Doppel-T-Träger bezeichnen.

Ggf. können die Stege in Richtung des Zylinders und/oder Zusatzzylinders mit einer Anfasung versehen sein. Für die Verbindung zum Zylinder und/oder Zusatzzylinder ergeben sich dann insbesondere beim Schweißen Vorteile bei der Nahtbildung.

Gemäß einen weiteren vorteilhaften Unteranspruch sind die Stege elastisch ausgeführt und damit in ihrem Abstand und/oder Winkel zueinander in Grenzen veränderbar. Damit können insbesondere Durchmessertoleranzen des Zylinders und/oder Zusatzzylinders ausgeglichen werden.

Aus Festigkeitsgründen oder auch zur Erzeugung einer größeren Kontaktfläche, insbesondere bei einer Widerstandsschweißverbindung weist der Quersteg eine treppenförmige Kontur in Richtung des Zylinders und/oder Zusatzzylinders auf.

Alternativ können die Stege ausgehend von dem Quersteg in einem Winkel zueinander angeordnet sein und damit tangential am Zylinder/Zusatzzylinder angreifen.

Unabhängig von der Ausgestaltung der Stege mit dem Quersteg muss nicht für jede Durchmesservariante des Zylinders/Zusatzzylinders ein angepasster Träger konzipiert werden. Bei dem erfindungsgemäßen Träger verändert sich lediglich der Abstand beider Zylinder, wenn deren Durchmesser variieren.

In weiterer vorteilhafter Ausgestaltung ist der Träger bezogen auf den Quersteg symmetrisch ausgeführt. Folglich erlaubt der Träger eine richtungsunabhängige Montage.

Des weiteren ist der Quersteg mit mindestens einer Durchgangsöffnung versehen, durch die ein Verbindungsrohrstück zwischen dem Zylinder und dem Zusatzzylinder verläuft. Zwischen dem Verbindungsrohrstück und dem Quersteg besteht kein Zentrierfunktion, so dass ein gewisser axialer Versatz zwischen dem Träger und dem Verbindungsrohrstück keinen Einfluss auf die Qualität des Produkts ausübt.

Um eine konkave Formgebung des Verbindungsrohrstücks vermeiden zu können, ist/sind der Zylinder und/oder der Zusatzzylinder mit einer Stufenöffnung ausgeführt, an der sich das Verbindungsrohrstück axial abstützt. Damit liegt eine einfache ebene Anlagefläche für das Verbindungsrohrstück vor.

In weiterer konstruktiver Ausgestaltung ist das Verbindungsrohrstück mit Dichtungen versehen. Es liegt eine strikte Trennung der Funktionen "Strömungsverbindung herstellen" und "Strömungsverbindung abdichten" vor, so dass eine optimale Materialauswahl möglich ist.

Dabei stützen sich die Dichtungen an einem Absatz des Verbindungsrohrstücks ab. Deshalb muss für die Dichtungen keine Ringnut in das Verbindungsrohrstück eingeformt werden, so dass es noch vorteilhafter ist, wenn das Verbindungsrohrstück aus einem Kunststoff besteht. Die besonders einfache Gestalt des Verbindungsrohres ohne Hinterschneidungen eignet sich besonders gut für die Spritzherstellung. Des weiteren kann die Elastizität des Kunststoffes ausgenutzt werden, um etwaige Form und Lagetoleranzen des Zylinders/Zusatzzylinders oder des Trägers zu kompensieren.

Anhand der folgenden Figurenbeschreibung soll die Erfindung verdeutlicht werden. Es zeigt:
- Fig. 1: Schwingungsdämpfer mit Zusatzzylinder in Gesamtdarstellung
- Fig. 2: Schnittdarstellung im Bereich einer Strömungsverbindung zwischen dem Schwingungsdämpfer und dem Zusatzzylinder
- Fig. 3 - 5: Querschnitte durch den Schwingungsdämpfer mit Zusatzzylinder

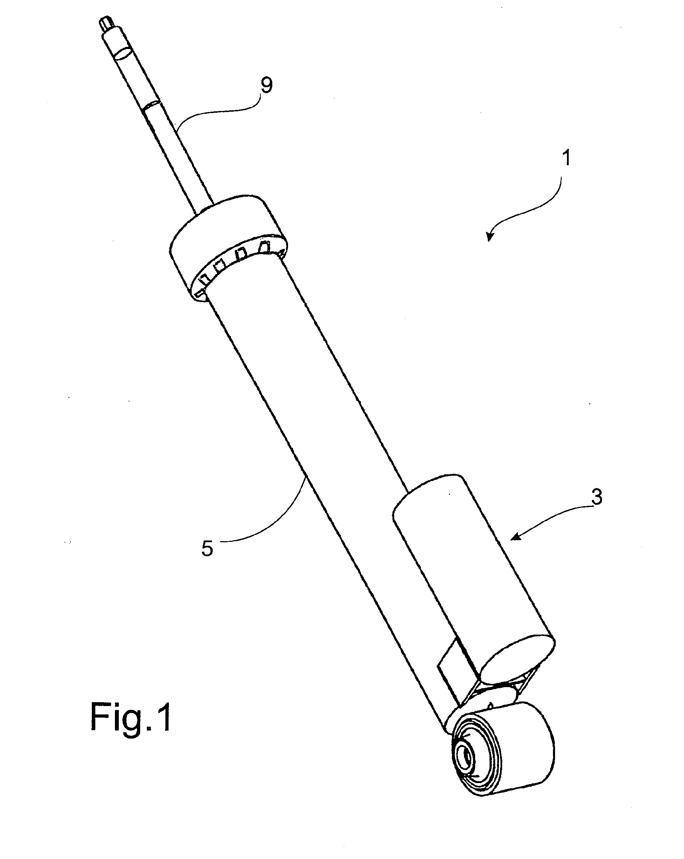

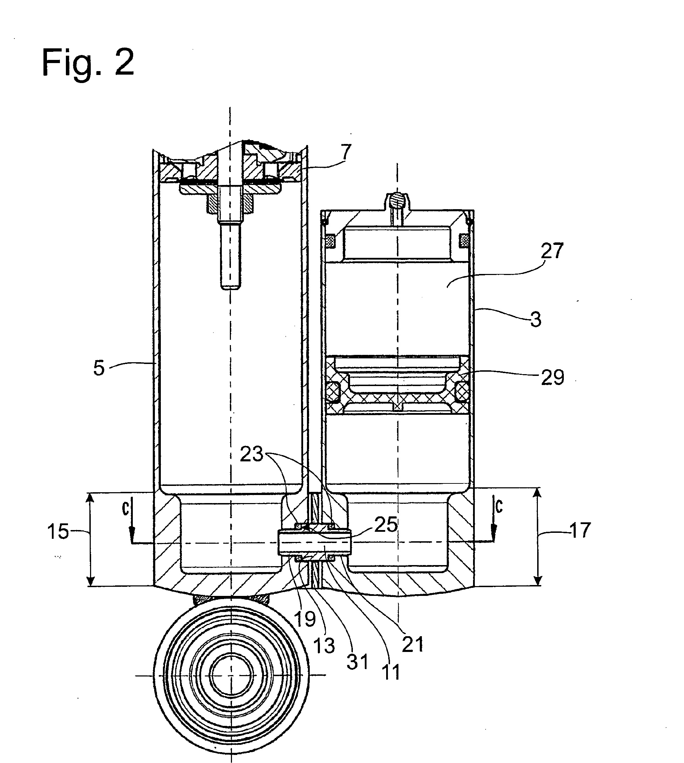

Die Fig. 1 zeigt die Ansicht eines Schwingungsdämpfers 1 mit einem externen Zusatzzylinder 3, der achsparallel angeordnet ist. Sowohl der Schwingungsdämpfer mit seinem Zylinder 5, wie auch der Zusatzzylinder 3 sind als Rohrkörper ausgeführt. Innerhalb des Schwingungsdämpfers ist ein Kolben 7 (Fig. 2) zusammen mit einer Kolbenstange 9 axial beweglich angeordnet, wobei ein Dämpfmedium, häufig ein Hydraulikmedium, zwischen dem Zylinder 5 und dem Zusatzzylinder 3 umgepumpt wird.

Aus der Fig. 2 ist ersichtlich, dass zwischen dem Zylinder 5 und dem Zusatzzylinder 3 eine Strömungsverbindung 11 vorliegt, die von einem Verbindungsrohrstück 13 gebildet wird. Der Zylinder 5 und auch der Zusatzzylinder 3 sind als Schmiederohlinge mit einem dickwandigen Anschlussabschnitt 15; 17 ausgeführt, in dem jeweils eine Stufenöffnung 19; 21 ausgeführt ist, an der sich das Verbindungsrohrstück 13 axial abstützt. Das Verbindungsrohrstück ist mit Dichtungen versehen, um einen Dämpfmediumaustritt zu verhindern. Diese Dichtungen 23 stützen sich an einem Absatz des Verbindungsrohrstücks 25 ab. Das Verbindungsrohrstück ist bevorzugt aus einem Kunststoff hergestellt und in Grenzen elastisch. Es übernimmt keine Haltefunktion zwischen den beiden Zylindern.

Innerhalb des Zusatzzylinders 3 ist ein gasgefüllter Ausgleichsraum 27 angeordnet, der von einem Trennkolben 29 zum Dämpfmedium getrennt wird. Alternativ kann man in dem Zusatzzylinder noch eine Dämpfventileinrichtung vorsehen.

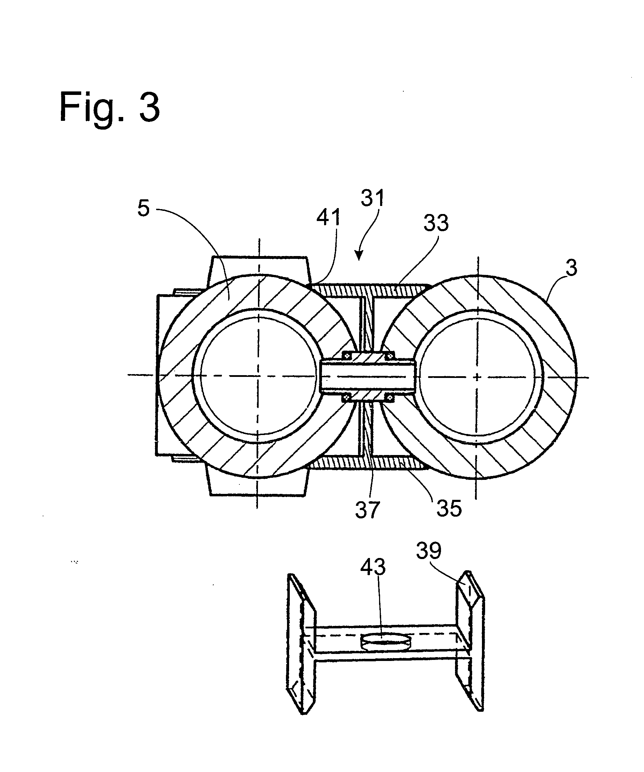

Die Haltefunktion gewährleistet ein Träger 31, der in der Variante nach Fig. 3 aus parallelen Stegen 33; 35 besteht, die radial zu den Zylindern 3; 5 verlaufen. Mindestens ein Quersteg 37 verbindet die beiden Stege, so dass insgesamt ein H-förmiges Profil vorliegt. Wie weiter zu erkennen ist, sind die Stege 33; 35 in Richtung des Zylinders und/oder Zusatzzylinders mit einer Anfasung 39 versehen, die einer Schweiß-, Klebe- oder Lötverbindung 41 dient. In Grenzen können die Stege elastisch ausgeführt sein, um damit in ihrem Abstand oder Winkel veränderbar zu sein, damit die Vorspannung zwischen den Zylindern und den Dichtungen auch bei ungünstigen Fertigungstoleranzen erhalten bleibt.

Der Quersteg verfügt über eine Durchgangsöffnung 43 für das Verbindungsrohrstück, wobei der Durchmesser der Durchgangsöffnung größer ist als der Außendurchmesser des Verbindungsrohrstücks.

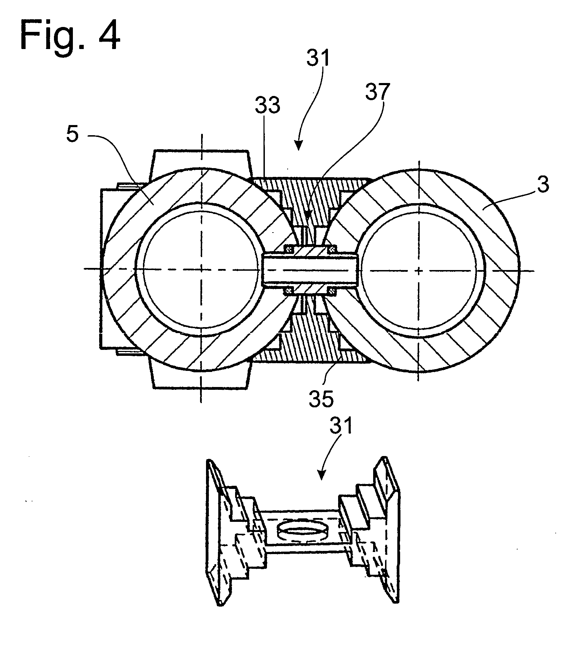

Die Fig. 4 zeigt eine Alternativvariante des Trägers 31, dessen Quersteg 37 eine treppenförmige Kontur in Richtung des Zylinders und/oder Zusatzzylinders aufweist. Die treppenförmige Kontur ist insbesondere im Zusammenhang mit einer Widerstandsschweißung interessant, da eine größere Linienberührung zwischen dem Träger und den Zylinder vorliegt. Andererseits können sehr verschieden große Durchmesser des Zylinders und des Zusatzzylinders miteinander verbunden werden.

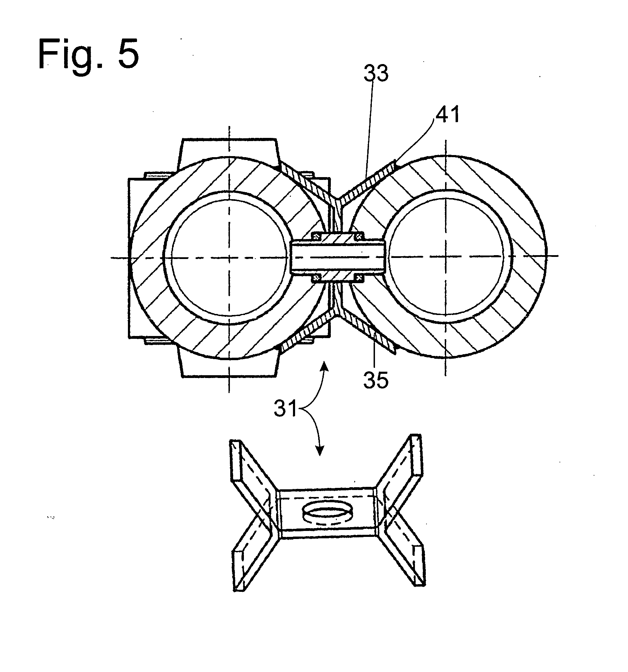

In der Fig. 5 kommt ein Träger 31 zur Anwendung, dessen Stege 33; 35 ausgehend von dem Quersteg 37 in einem Winkel zueinander angeordnet sind, so dass die Stege 33; 35 tangential am Zylinder 5 und/oder Zusatzzylinder 3 anliegen, so dass besonders günstig ein Kehlnaht 41 zwischen den Stegen 33; 35 und dem Zylinder/Zusatzzylinder 5; 3 hergestellt werden kann.

Unabhängig von der konkreten Form des Trägers ist es vorteilhaft, wenn die Stege symmetrisch zu dem Quersteg ausgeführt ist, wie in allen Varianten nach den Fig. 3 bis 5 beispielhaft gezeigt ist.

## Patentansprüche

1. Schwingungsdämpfer, umfassend einen mit einem Dämpfmedium gefüllten Zylinder, der eine Strömungsverbindung zu einem externen Zusatzzylinder aufweist, wobei zwischen dem Zylinder und dem Zusatzzylinder ein Träger angeordnet ist, der eine Halteverbindung zwischen dem Zylinder und dem Zusatzzylinder herstellt,
**dadurch gekennzeichnet,**
**dass** der Träger (31) mindestens zwei radial zum Zylinder (5) verlaufende Stege (33; 35) aufweist, die durch mindestens einen Quersteg (37) miteinander verbunden sind.

2. Schwingungsdämpfer nach Anspruch 1,
**dadurch gekennzeichnet,**
**dass** die Stege (33 35) parallel verlaufen und damit ein H-förmiges Profil des Trägers (31) vorliegt.

3. Schwingungsdämpfer nach Anspruch 1,
**dadurch gekennzeichnet,**
**dass** die Stege (33; 35) in Richtung des Zylinders (5) und/oder Zusatzzylinders (3) mit einer Anfasung (39) versehen sind.

4. Schwingungsdämpfer nach Anspruch 1,
**dadurch gekennzeichnet,**
**dass** die Stege (33; 35) elastisch ausgeführt und damit in ihrem Abstand und/oder Winkel zueinander in Grenzen veränderbar sind.

5. Schwingungsdämpfer nach Anspruch 1,
**dadurch gekennzeichnet,**
**dass** der Quersteg (37) eine treppenförmige Kontur in Richtung des Zylinders (5) und/oder Zusatzzylinders (3) aufweist.

6. Schwingungsdämpfer nach Anspruch 1,
**dadurch gekennzeichnet,**
**dass** die Steg (33; 35) ausgehend von dem Quersteg (37) in einem Winkel zueinander angeordnet sind.

7. Schwingungsdämpfer nach Anspruch 1,
**dadurch gekennzeichnet,**
**dass** der Träger (31) bezogen auf den Quersteg (37) symmetrisch ausgeführt ist.

8. Schwingungsdämpfer nach Anspruch 1,
**dadurch gekennzeichnet,**
**dass** der Quersteg (37) mit mindestens einer Durchgangsöffnung (43) versehen ist, durch die ein Verbindungsrohrstück (13) zwischen dem Zylinder (5) und dem Zusatzzylinder (3) verläuft.

9. Schwingungsdämpfer nach Anspruch 8,
**dadurch gekennzeichnet,**
**dass** der Zylinder (5) und/oder der Zusatzzylinder (3) mit einer Stufenöffnung (19; 21) ausgeführt ist, an der sich das Verbindungsrohrstück (13) axial abstützt.

10. Schwingungsdämpfer nach Anspruch 8,
**dadurch gekennzeichnet,**
**dass** das Verbindungsrohrstück (13) mit Dichtungen (23) versehen ist.

11. Schwingungsdämpfer nach Anspruch 10,
**dadurch gekennzeichnet,**
**dass** sich die Dichtungen (23) an einem Absatz (25) des Verbindungsrohrstücks (13) abstützen.

12. Schwingungsdämpfer nach Anspruch 8,
**dadurch gekennzeichnet,**
**dass** das Verbindungsrohrstück (13) aus einem Kunststoff besteht.
